# EUROPÄISCHE PATENTSCHRIFT

(11) **EP 3 368 934 B1**
(45) Veröffentlichungstag und Bekanntmachung des Hinweises auf die Patenterteilung: **11.05.2022**
(21) Anmeldenummer: 16784940.5
(22) Anmeldetag: 25.10.2016
(51) Int. Cl.: G02B 21/24

(54) **MIKROSKOP MIT OBJEKTIVWECHSELVORRICHTUNG**
MICROSCOPE HAVING AN OBJECTIVE-EXCHANGING DEVICE
MICROSCOPE À DISPOSITIF DE CHANGEMENT D'OBJECTIFS

(30) Priorität: 28.10.2015 DE 102015221040
(43) Veröffentlichungstag der Anmeldung: 05.09.2018
(73) Patentinhaber: Carl Zeiss Microscopy GmbH, 07745 Jena (DE)
(72) Erfinder: SCHACHT, Peter, 99097 Erfurt (DE); WAHL, Hubert, 07646 Stadtroda (DE); LANGHOLZ, Nils, 99510 Apolda (DE); HACKEL, Tobias, 99817 Eisenach (DE)
(74) Vertreter: Loritz, Rainer
(86) Internationale Anmeldenummer: PCT/EP2016/075611
(87) Internationale Veröffentlichungsnummer: WO 2017/072094

(56) Entgegenhaltungen:
- EP-A1- 1 168 027
- EP-A2- 2 827 181
- US-A- 3 488 109

## Beschreibung

Die Erfindung betrifft ein Mikroskop mit einer Objektivwechselvorrichtung gemäß dem Oberbegriff des Anspruchs 1.

Um Strukturen unterschiedlicher Größe mittels bildgebender Verfahren aufnehmen und analysieren zu können, sind Mikroskope mit verschiedenen Objektiven ausgestattet, die je nach gewünschter Vergrößerung in den optische Strahlengang des Mikroskops eingebracht, beispielsweise eingeschwenkt, werden können.

Sollen häufig Objektivwechsel erfolgen, können mehrere Objektive in einem Magazin angeordnet sein, wodurch ein schneller und wiederholter Zugriff auf ein ausgewähltes Objektiv ermöglicht ist und ein Objektivwechsel effizient durchgeführt werden kann. Beispielsweise ist bei sogenannten Revolvermagazinen ein ausgewähltes Objektiv mittels einer Drehung des Magazins um eine Rotationsachse in den optischen Strahlengang des Mikroskops einschwenkbar. Eine Fokussierung erfolgt durch das Einstellen eines Abstands zwischen dem Objektiv und einer zu mikroskopierenden Probe, indem das Magazin mit dem Objektiv oder die Probe verfahren wird.

Die Masse des Magazins sowie der daran befestigten Objektive bedingt bei einer Verfahrbewegung hohe mechanische Vorspannungen in dem zur Fokussierung genutzten Antriebsstrang oder Objektivantrieb, wodurch nachteilig sogenannte Stick-Slip-Effekte (Haftgleiteffekte) begünstigt werden, die insbesondere bei auf Reibung basierenden Führungen und Getrieben auftreten. Zur Reduzierung nachteiliger massebedingter Effekte sind aufwändige und damit teure Prinzipien und konstruktive Lösungen umzusetzen. Zudem sind vergleichsweise hohe Antriebsleistungen erforderlich und die Dynamikparameter des Abtriebs fallen ungünstig aus, was sich wiederum negativ auf die Positioniergenauigkeit des Objektivs auswirkt.

Ferner bedingt eine hohe Masse des Magazins und des Antriebsstrangs niedrige Eigenfrequenzen und damit hohe Schwingungsamplituden bei konstanter Anregungsenergie. Diese wirken sich bei hohen Vergrößerungen nachteilig auf die Auflösung und die Genauigkeit des Mikroskops aus.

Zudem führt der exzentrische Schwerpunkt des Magazins, insbesondere des Revolvermagazins, zu zusätzlichen und wechselnden mechanischen Belastungen des Antriebsstrangs. Beispielsweise führt ein Objektivwechsel wegen der unterschiedlichen Massen der einzelnen Objektive zu einer Verlagerung des Schwerpunkts und bedingt eine gegenüber dem Ausgangszustand vor dem Objektivwechsel veränderte Lastsituation, die sich ebenfalls negativ auf den Erhalt des Bildausschnitts und die Präzision der Verfahrbewegung auswirkt.

Aus der WO 2012/097191 A2 ist ein Mikroskop bekannt, das eine Objektivwechselvorrichtung mit einem Magazin zur Aufnahme einer Anzahl von Objektiven an jeweiligen Magazinpositionen aufweist. Ein ausgewähltes Objektiv ist bei Bedarf in einer zur Aufnahme und Halterung des Objektivs in einer Scaneinheit ausgebildeten Objektivaufnahme in einem optischen Strahlengang des Mikroskops positionierbar. Dazu wird eine Scaneinheit zusammen mit der Objektivaufnahme an eine bestimmte Magazinposition verfahren, um das an der betreffenden Magazinposition befindliche Objektiv mit der Objektivaufnahme aus dem Magazin zu heben und mittels einer Magnetkupplung mit der Objektivaufnahme zu verbinden. Zusätzlich wird das Objektiv an der Objektivaufnahme mittels einer auf beweglichen Kugeln basierenden Verriegelung arretiert. Weitere Mikroskope mit Objektivwechselvorrichtungen sind aus EP 1 168 027 A1 und US 3 488 109 A bekannt.

Die Scaneinheit wird nach der Aufnahme des Objektivs horizontal verfahren, bis sich das ausgewählte Objektiv in dem optischen Strahlengang des Mikroskops befindet. Nachteilig ist dabei die aufwendige horizontale Verfahrbewegung der Scaneinheit und der bei jedem Objektivwechsel erneut erforderliche Ausrichtung der Scaneinheit im optischen Strahlengang des Mikroskops.

Der Erfindung liegt die Aufgabe zugrunde ein Mikroskop anzugeben, bei dem ein Objektivwechsel ermöglicht ist und bei dem die aus dem Stand der Technik bekannten Nachteile zumindest reduziert sind.

Die Aufgabe wird durch die kennzeichnenden Merkmale des unabhängigen Anspruchs 1 gelöst. Vorteilhafte Ausgestaltungen sind Gegenstand der abhängigen Ansprüche.

Ein Mikroskop weist eine Objektivwechselvorrichtung auf, die ein Magazin zur Aufnahme einer Anzahl von Objektiven an jeweiligen Magazinpositionen und eine zur Aufnahme eines Objektivs ausgebildete und in einem optischen Strahlengang des Mikroskops angeordnete Objektivaufnahme umfasst. Erfindungsgemäß ist zum Transport jeweils eines ausgewählten und eine Objektivhalterung aufweisenden Objektivs zwischen seiner Magazinposition, die einer Übergabeposition zugestellt ist, und der Objektivaufnahme eine Objektivzustelleinrichtung ausgebildet, wobei die Objektivaufnahme während des Transports des Objektivs in dem optischen Strahlengang des Mikroskops verbleibt. Die Objektivhalterung weist einen äußeren Zentrierdurchmesser als eine Referenzfläche auf, der gegen eine in der Objektivaufnahme befindliche laterale Referenzfläche geführt oder gegen diese führbar ist, so dass eine reproduzierbare Positionierung senkrecht zu einer optischen Achse des Mikroskops erzielt beziehungsweise erzielbar ist.

Die Objektivzustelleinrichtung ist eine Komponente der Objektivwechselvorrichtung und ermöglicht den Transport des ausgewählten Objektivs zwischen der Magazinposition und der Objektivaufnahme, sodass ein Wechsel der Objektive des Mikroskops erfolgen kann und zugleich die Anzahl der in dem Magazin enthaltenen Objektive von der Objektivaufnahme entkoppelt für eine Nutzung vorgehalten sind.

Die Objektivaufnahme verbleibt insbesondere während des Transports des Objektivs zwischen der Magazinposition und der Objektivaufnahme in dem optischen Strahlengang des Mikroskops. Durch die unveränderte Position der Objektivaufnahme ist vorteilhaft eine Neuausrichtung oder Justierung der Objektivaufnahme nach einem Objektivwechsel vermieden. Insbesondere ist keine Neuausrichtung oder Justierung der Objektivaufnahme in einer sich im Wesentlichen orthogonal zum optischen Strahlengang erstreckenden X-Y-Ebene erforderlich.

Eine Fokussierung des Mikroskops erfolgt durch eine Veränderung des Abstands des in der Objektivaufnahme in einer Einsatzposition gehaltenen Objektivs und einer Objektebene in einer Z-Richtung.

Unter dem optischen Strahlengang des Mikroskops wird dessen optische Achse verstanden und zwar unabhängig davon, ob zu einem bestimmten Zeitpunkt tatsächlich Lichtstrahlen durch das Mikroskop treten. Unter der optischen Achse des Mikroskops, und nachfolgend auch unter der optischen Achse des Objektivs, wird der theoretische Verlauf eines Mittelstrahls verstanden, durch den vereinfacht ein Strahlengang durch das Mikroskop beziehungsweise durch das Objektiv tretender Lichtstrahlen darstellbar ist.

Während des Vorgangs der Fokussierung und jeder anderen Bewegung der Objektivaufnahme in der Z-Richtung ist lediglich höchstens ein Objektiv an der Objektivaufnahme gehalten. Die anderen für einen möglichen Objektivwechsel vorgehaltenen Objektive befinden sich in dem Magazin. Durch den Antriebsstrang, insbesondere einen Objektivantrieb zur Erzeugung einer Bewegung der Objektivaufnahme in Z-Richtung, ist daher eine geringe Masse zu beschleunigen und abzubremsen, wodurch Haftgleiteffekte verringert und die Dynamikeigenschaften des Objektivantriebs und des Mikroskops sowie die Präzision der Zustellbewegungen des Objektivantriebs verbessert sind. Zudem ist aufgrund der geringen Masse weniger Energie zum Beschleunigen und Abbremsen der Objektivaufnahme und der weiteren zum Zwecke der Fokussierung bewegten Bauteile des Mikroskops erforderlich, wodurch deren mechanische Belastung verringert wird.

Die geringere Masse des Objektivantriebs bedingt außerdem eine höhere Eigenfrequenz desselben, wodurch die Schwingungsamplituden bei gleicher Anregungsenergie reduziert sind. Dadurch ergeben sich gegenüber Objektivantrieben mit höherer Masse geringere dynamisch bedingte Abweichungen der Verfahrbewegungen, was die Bildauflösung des Mikroskops über die Zeit einer Aufnahme, beispielsweise eines Scans, verbessert.

Die Objektive weisen eine Objektivhalterung auf, die beispielsweise an einem Gehäuse des jeweiligen Objektivs angeformt, beispielweise bei einer spanenden Bearbeitung des Gehäuses ausgebildet, oder an diesem befestigt, beispielsweise angesteckt, angeschraubt und/oder angeklebt ist.

Das Objektiv kann in weiteren Ausführungen mit seinem Gehäuse in eine insbesondere plattenförmige Objektivhalterung beispielsweise eingeschraubt, eingepresst oder eingeklebt sein.

Wird im Folgenden vereinfachend von einem Transport des Objektivs oder der Objektivaufnahme gesprochen, ist damit immer auch der Transport der Objektivaufnahme beziehungsweise des Objektivs umfasst.

Die Objektivhalterung weist in einer möglichen Ausführung einen Kupplungsbereich zur lösbaren form- und/oder kraftschlüssigen und/oder auf Magnetismus beruhenden Verbindung des Kupplungsbereichs mit einem an dem Kupplungsbereich angreifenden Mitnehmer auf. Dabei kann der Kupplungsbereich derart ausgebildet sein, dass der Mitnehmer in und/oder an der Objektivhalterung angreift.

Beispielsweise ist der Kupplungsbereich als eine die Objektivhalterung mindestens abschnittsweise umlaufende Nut in einer mikroskopseitigen Seitenfläche und/oder in einer objektseitigen Seitenfläche ausgebildet.

Die mikroskopseitige Seitenfläche einer in der Objektivaufnahme befindlichen Objektivhalterung ist von einer Objektebene des Mikroskops abgewandt, während die objektseitige Seitenfläche der Objektebene zugewandt ist.

Die Objektivhalterung dient der Halterung des Objektivs beispielsweise während des Transports zwischen Magazinposition und Objektivaufnahme. Außerdem dienen Seitenflächen der Objektivhalterung der Bildung von Referenzflächen und Referenzpositionen oder sie dienen als Führungsflächen während des Transports des Objektivs.

In einer möglichen Ausführung des Mikroskops weist die Objektivhalterung mindestens eine plane und sich im Wesentlichen orthogonal zu einer optischen Achse des Objektivs erstreckende Anlagefläche auf, wobei unter der Formulierung "im Wesentlichen orthogonal" Abweichungen von einigen Grad, beispielsweise bis 45 Grad, umfasst sind. Beispielsweise ist die mikroskopseitige Seitenfläche der Objektivhalterung in einer möglichen Ausführung des Mikroskops vollständig oder abschnittsweise als eine Anlagefläche ausgebildet. Die Anlagefläche ist besonders präzise gearbeitet, so dass durch diese ein Referenzieren der Lage des Objektivs im optischen Strahlengang ermöglicht oder unterstützt ist.

Die Anlagefläche dient zur flächigen Anlage an eine entsprechend ausgebildete Widerlagerfläche der Objektivaufnahme. Die Widerlagerfläche und die an dieser flächig anliegenden Anlagefläche bilden eine Referenzfläche, auf die beispielsweise bei der Fokussierung des Objektivs steuerungstechnisch Bezug genommen wird (Referenzposition), um eine aktuelle Position des Objektivs in Z-Richtung zu ermitteln oder einzustellen.

Die orthogonal zur optischen Achse des Objektivs ausgebildeten Anlageflächen und die plane Ausführung der Objektivhalterung ermöglichen eine einfache und effiziente Herstellung und Bearbeitung der Objektivhalterung.

Die objektseitige Seitenfläche dient beispielsweise als Gleit- oder Führungsfläche der Objektivhalterung.

Eine funktionale Trennung der mikroskopseitigen Seitenfläche als Anlagefläche und Referenzfläche und der objektseitigen Seitenfläche als Gleit- oder Führungsfläche erlaubt vorteilhaft einen Transport der Objektivhalterung mit keinem oder nur sehr geringem Verschleiß der präzise hergestellten Anlagefläche der mikroskopseitigen Seitenfläche und deren wiederholte Nutzbarkeit zur Bildung der Referenzfläche. Die Objektivhalterung gleitet mindestens auf Abschnitten der objektseitigen Seitenfläche, wobei sich deren Verschleiß nicht nachteilig auf die Funktion der mikroskopseitigen Seitenfläche als Referenzfläche auswirkt.

Bei inversen Stativen ist der Aufbau an der XY-Ebene gespiegelt zu betrachten. Dann erfüllt die objektseitige Seitenfläche keine Funktion mehr und die mikroskopseitige Seitenfläche muss in Führungs- und Referenzfläche geteilt werden. Die Führungsfläche erlaubt vorteilhaft einen Transport der Objektivhalterung mit keinem oder nur sehr geringem Verschleiß der präzise hergestellten Referenzfläche.

Das Mikroskop ist in möglichen Ausführungen mit einem Stativ versehen, das als aufrechtes oder inverses Stativ ausgeführt ist.

In weiteren Ausführungen weist das Mikroskop ein Stativ auf, durch das das Objektiv abweichend von einer orthogonalen Ausrichtung zur Objektebene gehalten und/oder führbar ist.

In weiteren Ausführungen ist ein Abschnitt einer objektseitigen Fläche der Objektivhalterung als eine Objektivanlagefläche ausgebildet, an der das in der Objektivhalterung gehaltene Objektiv mit einem Bund seines Objektivgehäuses anliegt und an der eine weitere Referenzfläche gebildet ist.

Die Objektivhalterung kann in weiteren Ausführungen des Mikroskops mit elektrischen Kontakten ausgestattet sein, wodurch der Einsatz von adaptiven Optiken, Detektionselementen und/oder anderen elektrischen und/oder elektronischen Bauteilen an den Objektiven ermöglicht.

Um das Objektiv zwischen der Magazinposition und der Objektivaufnahme zu transportieren, weist die Objektivzustelleinrichtung einen Mitnehmer auf. Der Mitnehmer ist derart ausgebildet, dass durch diesen das Objektiv und/oder die Objektivhalterung kraft- und/oder formschlüssig und/oder über Magnetkraft kontaktierbar ist, um den Mitnehmer mit dem Objektiv und/oder mit der Objektivhalterung, vorzugsweise lösbar, kraft- und/oder formschlüssig zu verbinden und um das Objektiv zwischen der Magazinposition und der Objektivaufnahme gesteuert zu transportieren.

Ein Mitnehmer ist beispielsweise als ein horizontal und optional zusätzlich vertikal verfahrbarer oder verstellbarer Arm mit einem Haken, einer Klaue oder einem anders gestalteten Vorsprung ausgebildet.

Die Objektivhalterung weist einen äußeren Zentrierdurchmesser als eine Referenzfläche auf. Mittels des Mitnehmers ist das Objektiv mit dieser Referenzfläche gegen laterale Referenzflächen in der Klemmvorrichtung gezogen oder ziehbar. Somit ist eine reproduzierbare Positionierung senkrecht zur optischen Achse des Mikroskops erzielbar. Um das Objektiv in der Einsatzposition in der Objektivaufnahme ortsfest zu halten, weist das Mikroskop eine Klemmvorrichtung auf. Die Objektivaufnahme ermöglicht beispielsweise eine Fokussierbewegungen des Mikroskops, bei denen die Objektivaufnahme in Z-Richtung verfahren wird, ohne dass dabei eine Position und Ausrichtung des Objektivs relativ zur Objektivaufnahme verändert wird. In der Einsatzposition fällt eine optische Achse des Objektivs mit dem optischen Strahlengang des Mikroskops zusammen und die tatsächliche Positionierung und Ausrichtung des Objektivs ist durch dessen Anlage an der mindestens einen als Referenzfläche fungierenden Anlagefläche festgelegt.

Die Objektivaufnahme umfasst die Anlagefläche als eine Referenzfläche der Objektivaufnahme und mindestens ein Klemmelement der Klemmvorrichtung. Die Objektivhalterung ist durch das Klemmelement mit ihrer Anlagefläche gegen die Widerlagerfläche geklemmt oder klemmbar. Sind mehrere Anlageflächen ausgebildet, sind die Anlageflächen der Objektivhalterung jeweils gegen eine Widerlagerfläche geklemmt oder klemmbar.

In einer möglichen weiteren Ausführung der Klemmvorrichtung ist das Klemmelement mit einem Klemmelementantrieb verbunden und durch diesen in der Z-Richtung bewegbar. Mittels des Klemmelementantriebs ist das Klemmelement in Z-Richtung zwischen einer Öffnungsposition und einer Klemmposition des Klemmelements gesteuert bewegbar. In der Öffnungsposition ist das Klemmelement so weit von der Widerlagerfläche entfernt, dass die Objektivhalterung mit Spiel zwischen dem Klemmelement und der Widerlagerfläche angeordnet ist beziehungsweise die Objektivhalterung zwischen Klemmelement und der Widerlagerfläche eingebracht oder entfernt werden kann, ohne dass dabei eine Klemmkraft zu überwinden ist.

In der Klemmposition ist das Klemmelement der Widerlagerfläche so weit angenähert, dass die Objektivhalterung durch eine zwischen dem Klemmelement und der Widerlagerfläche wirkenden Klemmkraft gehalten ist. Ein Klemmen der Objektivhalterung bewirkt eine bessere dynamische Kopplung an das Mikroskop, als dies beispielsweise mit einer Magnetkupplung der Fall ist. Die Steifigkeit der Kopplung an das Mikroskop ist durch das Klemmen der Objektivhalterung ebenfalls vorteilhaft erhöht.

In weiteren Ausführungen ist die Funktion des Klemmelementantriebs durch einen Objektivantrieb erfüllt, der zur Erzeugung einer Bewegung mindestens der Objektivaufnahme in Z-Richtung ausgebildet ist.

Das Magazin ist beispielsweise an einem Gehäuse und/oder an einer tragenden Struktur des Mikroskops, beispielsweise an einem Gestell oder Stativ des Mikroskops, angeordnet und derart beweglich ausgeführt, dass dessen Magazinpositionen einer Übergabeposition zustellbar sind. Dabei ist das Magazin oberhalb einer Objektebene angeordnet um einen Objektivwechsel zu ermöglichen ohne dabei eine in der Objektebene befindliche Probe zu beeinträchtigen.

Ist eine Magazinposition der Übergabeposition zugestellt, so ist ein Transport des an der betreffenden Magazinposition befindlichen Objektivs zur Objektaufnahme oder der Transport eines an der Objektaufnahme befindlichen Objektivs an die betreffende Magazinposition ermöglicht. Dazu kann der Mitnehmer mit dem Kopplungsbereich verbunden werden und infolge einer gesteuerten Bewegung des Mitnehmers erfolgt der Transport des Objektivs. Nach Beendigung des Transports, insbesondere nach einer Beendigung des Transports des Objektivs von der Objektivaufnahme an die Magazinposition, ist der Mitnehmer von dem Kupplungsbereich abgekuppelt oder abkuppelbar.

Das Magazin kann verschieden ausgeführt sein und ist in einer möglichen Ausführung ein beweglich angeordnetes Reihenmagazin, dessen Magazinpositionen mindestens einer Übergabeposition zustellbar sind.

In einer weiteren möglichen Ausführung des Magazins ist dieses als ein beweglich angeordnetes Revolvermagazin ausgebildet. Ein rotationssymmetrisches Magazin wie ein Revolvermagazin erlaubt kurze Zustellwege der Objektive zu der Übergabeposition. Zudem werden nur unter hohen Kosten fertigbare präzise Führungen zum Transport der Objektive weitgehend oder gänzlich vermieden. Die Ausführung des Magazins als ein rotationssymmetrisches Magazin wie ein Revolvermagazin ermöglicht vorteilhaft einen kompakten Aufbau der Objektivwechselvorrichtung und deren kostengünstige Fertigung.

Um die in dem Magazin enthaltenen Objektive aus dem Bildbereich des Mikroskops zu halten und/oder um eine möglichst große Bewegungsfreiheit des Mikroskops im Bereich des Objektivs zu ermöglichen, ist das Magazin in möglichen Ausführungen des Mikroskops um eine zum optischen Strahlengang des Mikroskops verkippte Rotationsachse drehbar ausgebildet. Mittels des erfindungsgemäßen Mikroskops sind bei einer entsprechend großen Verkippung der Rotationsachse große Verfahrbereiche der Proben möglich und somit große Proben mikroskopierbar.

Das erfindungsgemäße Mikroskop kann verschiedenste Objektive aufweisen und als ein Mikroskop ausgewählt aus dem gesamten Bereich der Mikroskopie ausgebildet sein. Das Mikroskop kann beispielsweise für die Weitfeldmikroskopie, die konfokale Mikroskopie, die Laserscanning-Mikroskopie sowie die Lichtblatt-Mikroskopie (light sheet microscopy) ausgebildet sein. Das Mikroskop kann in weiteren Ausführungen mit einem Interferometer, insbesondere mit einen Weißlichtinterferometer ausgerüstet sein. Die Objektivwechselvorrichtung kann auch mit einem Interferometer, insbesondere mit einem Weißlichtinterferometer kombiniert sein.

Die Erfindung wird nachfolgend anhand von Ausführungsbeispielen und Figuren näher erläutert. Dabei zeigen:
- Fig. 1: eine schematische Darstellung eines Ausführungsbeispiels eines Objektivs mit einer Objektivhalterung;
- Fig. 2: eine schematische Darstellung eines ersten Ausführungsbeispiels eines erfindungsgemäßen Mikroskops;
- Fig. 3: eine schematische Darstellung eines zweiten Ausführungsbeispiels eines erfindungsgemäßen Mikroskops in einem ersten Betriebszustand;
- Fig. 4: eine schematische Darstellung des ersten Ausführungsbeispiels eines erfindungsgemäßen Mikroskops in einem zweiten Betriebszustand;
- Fig. 5: eine schematische Darstellung des ersten Ausführungsbeispiels eines erfindungsgemäßen Mikroskops in einem dritten Betriebszustand und
- Fig. 6: eine schematische Darstellung eines dritten Ausführungsbeispiels eines erfindungsgemäßen Mikroskops.

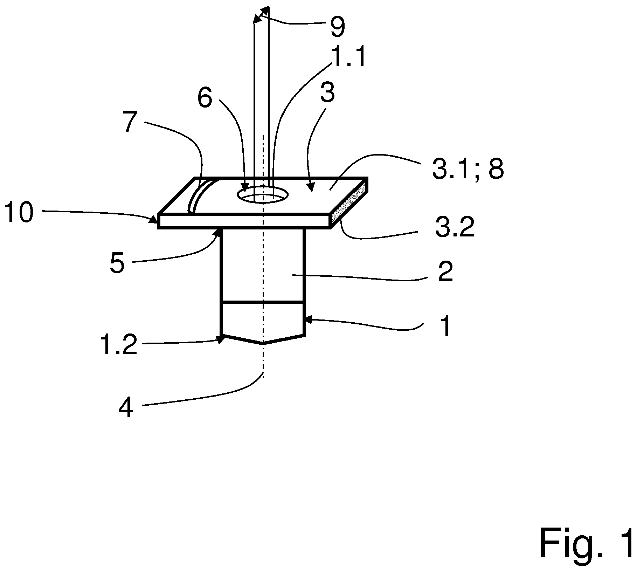

Die Fig. 1 bis Fig. 6 sind schematische Darstellungen möglicher Ausführungen eines erfindungsgemäßen Mikroskops 12. Durch gleiche Bezugszeichen sind gleiche technische Elemente bezeichnet.

In der Fig. 1 ist ein Ausführungsbeispiel eines Objektivs 1 mit einer Objektivhalterung 3 dargestellt. Das Objektiv 1 weist ein Objektivgehäuse 2 auf, das mit einem ersten Ende 1.1 in eine Objektivhalterung 3 eingeschraubt ist, so dass das Objektiv 1 mit einem zweiten Ende 1.2 einseitig aus einer nach unten weisend dargestellten objektseitigen Seitenfläche 3.2 der Objektivhalterung 3 ragt.

Bei inversen Mikroskopen 12 ist der gesamte Aufbau um die Horizontale gedreht zu betrachten.

Die Objektivhalterung 3 weist eine mikroskopseitige Seitenfläche 3.1 und die dazu parallele objektseitige Seitenflächen 3.2 auf, wobei eine Normale der objektseitigen Seitenfläche 3.2 in Richtung des zweiten Endes 1.2 des Objektivs 1 und parallel zur optischen Achse 4 des Objektivs 1 weist.

Ein Abschnitt der objektseitigen Seitenfläche 3.2 ist als eine Objektivanlagefläche 5 ausgebildet, an der das Objektiv 1 mit einem nicht näher dargestellten Bund des Objektivgehäuses 2 anliegt. Durch die Objektivanlagefläche 5 und den daran anliegenden Bund ist eine Referenzfläche 6 des Objektivs 1 gegeben. Die geometrische Gestaltung der Objektivhalterung 3 erlaubt eine einfache Fertigung hinsichtlich der Parallelität der Seitenflächen 3.1 und 3.2 sowie einer hohen Konzentrizität der Objektivanlagefläche 5 und des Bundes und somit der präzisen Ausbildung der Referenzfläche 6.

In der mikroskopseitigen Seitenfläche 3.1 ist ein Kupplungsbereich 7 in Form einer schematisch dargestellten Nut ausgebildet. Durch den Kupplungsbereich 7 ist die optische Achse 4 des Objektivs 1 abschnittsweise umfangen.

Zusätzlich zu dem Kupplungsbereich 7 und nicht mit diesem überlappend ist ein Abschnitt der mikroskopseitigen Seitenfläche 3.1 als eine Anlagefläche 8 ausgebildet.

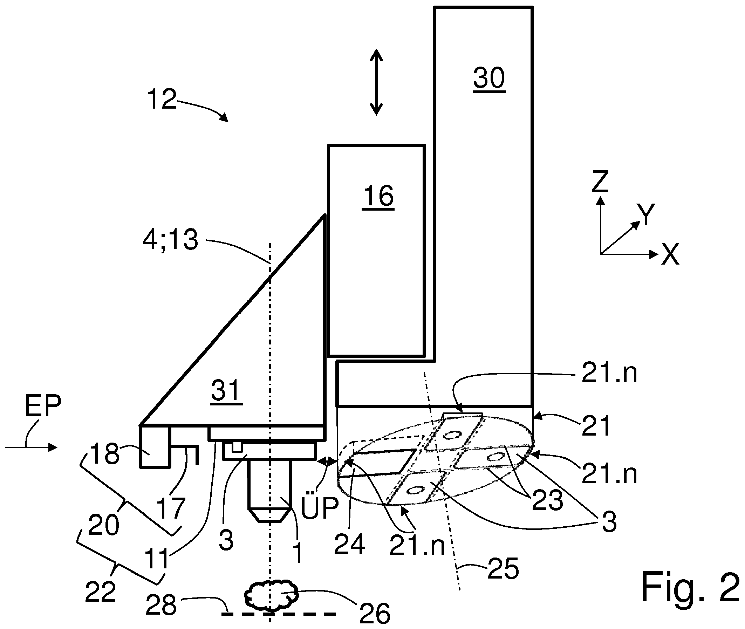

Die Objektivhalterung 3 weist einen inneren Zentrierdurchmesser 9 zum Zentrieren des Objektivs 1 zur Objektivhalterung 3 sowie einen äußeren Zentrierdurchmesser 10 zur Zentrierung der Objektivhalterung 3 in einer Objektaufnahme 11 (siehe Figuren 2 bis 5) auf.

In weiteren Ausführungen des Mikroskops 12 sind DIC-Schieber (DIC = digitaler Interferenzkontrast, digital interference contrast) in die Objektivhalterungen 3 integriert oder integrierbar.

Ein erstes Ausführungsbeispiel des Mikroskops 12 ist in der Fig. 2 schematisch und aus Gründen der Übersichtlichkeit lediglich teilweise dargestellt. Das Mikroskop 12 weist eine Objektivaufnahme 11 mit einem freien Querschnitt auf, durch den eine optische Achse des Mikroskops 12, hier als optischer Strahlengang 13 bezeichnet, verläuft. In der Objektivaufnahme 11 ist ein Objektiv 1 mittels seiner Objektivhalterung 3 gehalten. Das Objektiv 1 befindet sich an einer durch einen horizontal gerichteten Pfeil symbolisch dargestellten Einsatzposition EP und ist derart in dem optischen Strahlengang 13 angeordnet, dass die optische Achse 4 des Objektivs 1 mit dem optischen Strahlengang 13 zusammenfällt, sodass das Mikroskop 12 funktionsfähig ist.

Eine Richtung entlang des optischen Strahlengangs 13 wird als Z-Richtung Z bezeichnet, während orthogonal zur Z-Richtung Z und orthogonal zueinander je eine X-Richtung X und eine Y-Richtung Y definiert sind. Die genannten Richtungen X, Y, Z sind durch die Achsen eines kartesischen Koordinatensystems gegeben.

Das Mikroskop 12 ist mit einem Objektivantrieb 16 zur Erzeugung einer gesteuerten Verfahrbewegung der an einem Träger 31 angeordneten Objektivaufnahme 11 in Z-Richtung Z versehen. Die Objektivaufnahme 11 ist über ein Verbindungselement 31 mit dem Objektivantrieb 16 verbunden. Der Objektivantrieb 16 kann Grob- und Feintriebe aufweisen oder durch diese gebildet sein.

Ferner weist das Mikroskop 12 einen Mitnehmer 17 und einen Mitnehmerantrieb 18 zur gesteuerten Erzeugung einer Bewegung des Mitnehmers 17 insbesondere in einer XY-Ebene XY auf.

In einem als ein Revolvermagazin ausgebildeten Magazin 21 ist eine Anzahl von Objektiven 1 vorgehalten, wobei aus Gründen der Übersichtlichkeit in dem Magazin 21 nur die Objektivhalterungen 3 der dort vorgehaltenen Objektive 1 dargestellt sind. Das Magazin 21 und der Objektivantrieb 16 sind beweglich mit einem Stativ 30 des Mikroskops 12 verbunden und durch dieses gehalten.

Jedes Objektiv 1 ist mit seiner Objektivhalterung 3 an einer Magazinposition 21.n des Magazins 21 gehalten. Jede der Objektivhalterungen 3 ist in einen mit zwei sich gegenüberliegenden und durch schematisch durch Strichlinien angedeutet dargestellte Führungen 23 versehenen U-förmigen Einschub 24 des Magazins 21 eingesteckt, wobei durch jeden Einschub 24 eine Magazinposition 21.n gegeben ist. Das Magazin 21 ist um eine Rotationsachse 25 drehbar gelagert, die gegenüber dem optischen Strahlengang 13 gekippt ist. Jeweils eine der Magazinpositionen 21.n ist einer Übergabeposition ÜP zustellbar, an der ein im Wesentlichen horizontaler Transport eines Objektivs 1 zwischen der der Übergabeposition ÜP zugestellten Magazinposition 21.n und der Objektivaufnahme 11 möglich ist.

Diejenigen Magazinpositionen 21.n, die sich zu einem Zeitpunkt außerhalb der Übergabeposition ÜP befinden, sind aufgrund der gekippten Rotationsachse 25 aus der XY-Ebene XY, in der der horizontale Transport des Objektivs 1 stattfindet oder stattfinden kann, herausbewegt. Die nicht an der Übergabeposition ÜP befindlichen Objektive 1 sind somit von einer mit dem Mikroskop 12 zu untersuchenden und sich in einer Objektebene 28 befindlichen Probe 26 weggeschwenkt, was insbesondere bei komplex strukturierten Proben 26 und/oder bei schwer zugänglichen Bereichen der Probe 26 von Vorteil ist.

Ist das Magazin 21 in weiteren Ausführungen als ein Reihenmagazin ausgestaltet, ist dieses mittels einer Translation derart bewegbar, dass dessen Magazinpositionen 21.n der Übergabeposition ÜP zustellbar sind.

Die Magazinpositionen 21.n sind in weiteren möglichen Ausführungen des Mikroskops 12 vertikal übereinander angeordnet.

Die Zustellung der Magazinpositionen 21.n kann in weiteren Ausführungen des Mikroskops 12 manuell erfolgen. In einem solchen Fall ist das Magazin 21 vorteilhaft mit einem Rastmechanismus versehen.

Um Kollisionen für den Fall zu vermeiden, dass sich sowohl in der Objektaufnahme 11 als auch in derjenigen Magazinposition 21.n, die aktuell der Übergabeposition ÜP zugestellt ist Objektive 1 befinden, sind optional Sensoren (nicht dargestellt) zur Erfassung des Vorhandenseins eines Objektivs 1 und/oder ein mechanisch wirkender Sperrmechanismus vorhanden.

Der Mitnehmer 17 und der Mitnehmerantrieb 18 stellen wesentliche Komponenten einer Objektivzustelleinrichtung 20 des Mikroskops 12 dar.

Durch die Objektivzustelleinrichtung 20, die Objektivaufnahme 11 und das Magazin 21 ist eine Objektivwechselvorrichtung 22 des Mikroskops 12 gebildet.

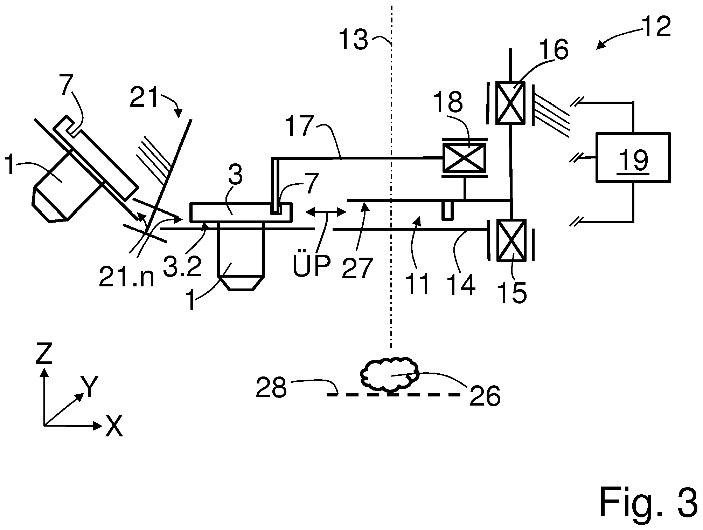

Anhand der Figuren 3 bis 5 werden nachfolgend schematisch aufeinander folgende Betriebszustände eines zweiten Ausführungsbeispiels des Mikroskops 12 erläutert.

Die Objektivaufnahme 11 weist ein als Klemmbacke ausgeführtes Klemmelement 14 und eine Widerlagerfläche 27 an einer Wand oder einem Stege der Objektivaufnahme 11 auf. Zur Erzeugung einer gesteuerten Bewegung des Klemmelements 14 in Z-Richtung Z steht das Klemmelement 14 mit einem Klemmelementantrieb 15 in Verbindung und ist durch diesen bewegbar.

Der Klemmelementantrieb 15, der Objektivantrieb 16 und der Mitnehmerantrieb 18 stehen mit einer Steuerungseinheit 19 in Verbindung, durch welche diese beispielsweise hinsichtlich Zeitpunkt, Zeitdauer, Richtung und Betrag der bewirkten Bewegungen angesteuert oder ansteuerbar sind.

Durch den Klemmelementantrieb 15, den Objektivantrieb 16, den Mitnehmerantrieb 18 und die Steuerungseinheit 19 sind der Objektivwechsel sowie ein Klemmen und/oder Lösen der Objektivhalterung 3 weitgehend automatisiert ausführbar, wodurch eine leichte Bedienbarkeit des Mikroskops 12 sichergestellt und die Gefahr von Fehlbedienungen reduziert ist.

In der Fig. 3 ist das Magazin 21 dargestellt, das mit einer seiner Magazinpositionen 21.n, an der ein Objektiv 1 mit seiner Objektivhalterung 3 gehalten ist, der Übergabeposition ÜP zugestellt ist. An einer weiteren Magazinpositionen 21.n ist ein weiteres Objektiv 1 mit Objektivhalterung 3 dargestellt, dass aufgrund der gekippten Rotationsachse 25 aus der XY-Ebene XY ausgeschwenkt ist.

Die Objektivaufnahme 11 ist mittels des Objektivantriebs 16 in Z-Richtung Z verfahren und befindet sich in Höhe der Übergabeposition ÜP, die durch die Anordnung und Dimensionierung des Magazins 21 oberhalb der Objektebene 28 festgelegt ist. Die Festlegung der Übergabeposition ÜP oberhalb der Objektebene 28 ermöglicht einen Objektivwechsel ohne eine Beeinträchtigung der Probe 26.

Der Mitnehmer 17 ist mittels des durch die Steuerungseinheit 19 angesteuerten Mitnehmerantriebs 18 in der XY-Ebene XY derart verfahren, dass der Mitnehmer 17 formschlüssig in den Kupplungsbereich 7 eingreift.

Der Mitnehmer 17 und der Mitnehmerantrieb 18 sind in dem dargestellten Ausführungsbeispiel mit dem Objektivantrieb 16 in Z-Richtung Z verfahrbar angeordnet.

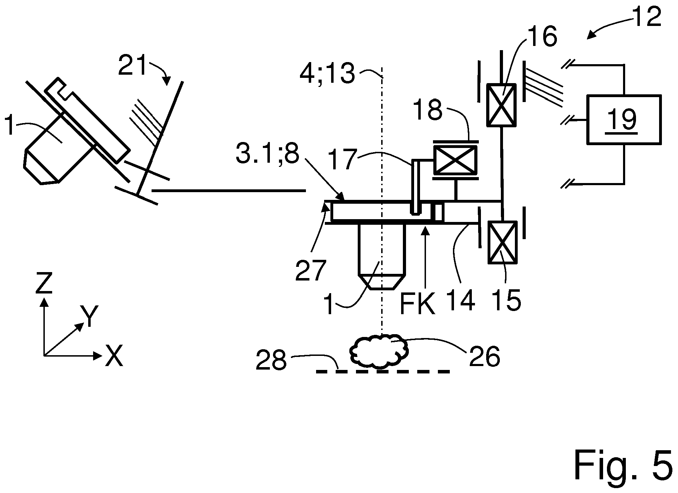

In weiteren möglichen Ausführungen des Mikroskops 12 sind der Mitnehmer 17 und der Mitnehmerantrieb 18 an dem Stativ 30 oder an einem Gehäuse des Mikroskops 12 befestigt. Die Objektivhalterung 3 mit dem Objektiv 1 ist horizontal zur Objektivaufnahme 11 transportierbar, indem der Mitnehmerantrieb 18 durch die Steuerungseinheit 19 mittels eines Steuerbefehls eingeschalten wird, wobei das Objektiv 1 während des Transports auf der objektseitigen Seitenfläche 3.2 gleitet. Das Klemmelement 14 befindet sich an einer Öffnungsposition, sodass die Objektivhalterung 3 in die Objektivaufnahme 11 und zwischen Klemmelement 14 und Widerlagerfläche 27 transportierbar ist, ohne dass auf durch das Klemmelement 14 eine Klemmkraft FK (siehe Fig. 5) auf die Objektivhalterung 3 ausgeübt ist.

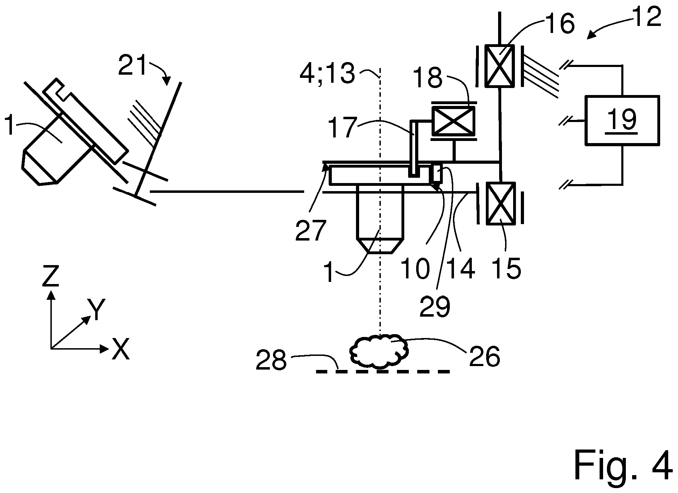

In einem in der Fig. 4 schematisch dargestellten zweiten Betriebszustand des Mikroskops 12 ist das Objektiv 1 mittels des Mitnehmers 17 in der XY-Ebene XY in die Objektivaufnahme 11 gezogen.

Das Objektiv 1 ist mit dem äußeren Zentrierdurchmesser 10 gegen zwei in der Objektaufnahme 3 angeordnete Anschläge 29 geführt und dort gehalten. Der äußere Zentrierdurchmesser 10 ist dabei gegenüber dem inneren Zentrierdurchmesser 9 (siehe Fig. 1) in der XY-Ebene XY ausrichtbar, sodass eine möglichst optimale Konzentrizität beider Zentrierdurchmesser 9, 10 erreicht ist. Die Ausrichtung der Zentrierdurchmesser 9, 10 ist dabei durch Zusammenwirken einer präzise gefertigten Widerlagerfläche 27 und der mikroskopseitigen Seitenfläche 3.1 sowie der Anschläge 29 und des äußeren Zentrierdurchmessers 10 erzielt.

In einem in der Fig. 5 dargestellten dritten Betriebszustand des Mikroskops 12 ist die in der Objektivaufnahme 11 befindliche Objektivaufnahme 3 mit ihrer als Anlagefläche 8 ausgebildeten mikroskopseitigen Seitenfläche 3.1 mittels des Klemmelements 14 gegen die Widerlagerfläche 27 geführt und dort durch eine mittels des durch die Steuerungseinheit19 angesteuerten Klemmelementantriebs 15 bewirkten Klemmkraft FK gehalten.

Die Objektivaufnahme 11 mit der darin geklemmten Objektivaufnahme 3 ist entlang des optischen Strahlengangs 13 mittels des Objektivantriebs 16 in Z-Richtung Z auf die Objektebene 28 zum Zwecke der Fokussierung des Mikroskops 12 verfahren.

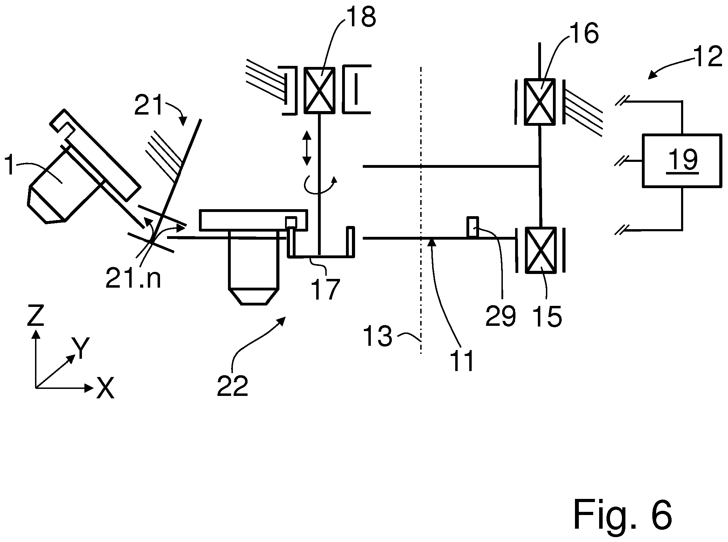

In einem weiteren Ausführungsbeispiel des Mikroskops 12 und der Objektivwechselvorrichtung 22 weist das Magazin 21 keine Einschübe 24 mit Führungen 23 auf, sondern die Objektive 1 sind an den jeweiligen Magazinpositionen 21.n verankert, beispielsweise eingehängt, wie dies in der Fig. 6 schematisch dargestellt ist. Mittels eines parallel zum optischen Strahlengang 13 angeordneten Drehgelenks als Mitnehmer 17 ist ein an der Übergabeposition ÜP befindliches Objektiv 1 mit Objektivhalterung 3 aus der Magazinposition 21.n aushebbar und in den optischen Strahlengang 13 einschwenkbar. Das Objektiv 1 wird dabei in der Objektivaufnahme 11 verankert, beispielsweise eingehängt. Durch diese Ausführung ist der Transport des Objektivs 1 gegenüber einem horizontalen Verschieben vereinfacht und erfordert keine hohe Präzision der Zustellung von Übergabeposition ÜP und der Objektivaufnahme 11 zueinander in Z-Richtung Z.

In weiteren möglichen Ausführungen ist die Objektivhalterung 3 klemmbar, indem diese durch den Objektivantrieb 16 gegen Anschläge 29 gedrückt ist, die an einem Stativ 30 oder an einem Gehäuse des Mikroskops 12 angeordnet sind. Eine solche Ausführung erübrigt einen separaten Klemmelementantrieb 15 und reduziert den erforderlichen steuerungstechnischen Aufwand. Allerdings muss das Klemmen dann über mechanische Federelemente erfolgen, gegen die der Objektivantrieb 16 wirkt.

In weiteren möglichen Ausführungen des Mikroskops 12 ist die Objektivhalterung 3 mit der objektseitigen Seitenfläche 3.2 mittels des Objektivantriebs 16 gegen eine objektseitig ausgebildete Widerlagerfläche 27 klemmbar, wodurch eine Position des Objektivs 1 und der Objektivhalterung 3 in der Objektivaufnahme 11 vereinfachend auf nur eine Referenzfläche 6 bezogen werden kann.

Bei inversen Stativen ist der Aufbau an der XY-Ebene gespiegelt zu betrachten.

Die vorgenannten möglichen Ausführungen und Ausführungsbeispiele sind im Rahmen fachmännischer Überlegungen miteinander kombinierbar.

### Bezugszeichen

- 1: Objektiv
- 1.1: erstes Ende (des Objektivs 1)
- 1.2: zweites Ende (des Objektivs 1)
- 2: Objektivgehäuse
- 3: Objektivhalterung
- 3.1: mikroskopseitige Seitenfläche
- 3.2: objektseitige Seitenfläche
- 4: optische Achse (des Objektivs 1)
- 5: Objektivanlagefläche
- 6: Referenzfläche
- 7: Kupplungsbereich
- 8: Anlagefläche
- 9: innerer Zentrierdurchmesser
- 10: äußerer Zentrierdurchmesser
- 11: Objektivaufnahme
- 12: Mikroskop
- 13: optischer Strahlengang
- 14: Klemmelement
- 15: Klemmelementantrieb
- 16: Objektivantrieb
- 17: Mitnehmer
- 18: Mitnehmerantrieb
- 19: Steuerungseinheit
- 20: Objektivzustelleinrichtung
- 21: Magazin
- 21.n: Magazinposition
- 22: Objektivwechselvorrichtung
- 23: Führung
- 24: Einschub
- 25: Rotationsachse
- 26: Probe
- 27: Widerlagerfläche
- 28: Objektebene
- 29: Anschlag
- 30: Stativ
- 31: Träger
- EP: Einsatzposition
- ÜP: Übergabeposition
- X-Y: x-y-Ebene
- X: X-Richtung
- Y: Y-Richtung
- Z: Z-Richtung
- FK: Klemmkraft

## Patentansprüche

1. Mikroskop (12) aufweisend eine Objektivwechselvorrichtung (22) mit einem Magazin (21) zur Aufnahme einer Anzahl von Objektiven (1) an jeweiligen Magazinpositionen (21.n) und mit mindestens einem Objektiv (1), einer zur Aufnahme des Objektivs (1) ausgebildeten und in einem optischen Strahlengang (13) des Mikroskops (12) angeordneten Objektivaufnahme (11),
und einer zum Transport jeweils eines ausgewählten und eine Objektivhalterung (3) aufweisenden Objektivs (1) zwischen seiner an eine Übergabeposition (ÜP) zugestellten Magazinposition (21.n) und der Objektivaufnahme (11) ausgebildeten Objektivzustelleinrichtung (20), wobei die Objektivaufnahme (11) während des Transports des Objektivs (1) in dem optischen Strahlengang (13) verbleibt, die Objektivhalterung (3) an einem Objektivgehäuse (2) des Objektivs (1) angeformt oder an diesem befestigt ist und die Objektivhalterung (3) einen äußeren Zentrierdurchmesser (10) als eine Referenzfläche aufweist, der gegen eine in der Objektivaufnahme (11) befindliche laterale Referenzfläche geführt ist, so dass eine reproduzierbare Positionierung senkrecht zu einer optischen Achse (4) des Mikroskops (12) erzielbar ist,
und weiterhin die Objektivhalterung (3) mindestens eine plane und sich orthogonal zu einer optischen Achse (4) des Objektivs (1) erstreckende Anlagefläche (8) aufweist; eine Klemmvorrichtung zur ortsfesten Halterung des Objektivs (1) in einer Einsatzposition (EP) in der Objektivaufnahme (11) vorhanden ist und
die Klemmvorrichtung durch eine Widerlagerfläche (27) der Objektivaufnahme (11) und mindestens ein Klemmelement (14) gebildet ist, wobei die Objektivhalterung (3) des in der Einsatzposition (EP) befindlichen Objektivs (1) durch das Klemmelement (14) mit ihrer Anlagefläche (8) gegen die Widerlagerfläche (27) klemmbar ist.

2. Mikroskop (12) nach Anspruch 1, wobei die Objektivzustelleinrichtung (20) einen Mitnehmer (17) aufweist und die Objektivhalterung (3) einen Kupplungsbereich (7) zur lösbaren form- und/oder kraftschlüssigen und/oder magnetischen Verbindung des Kupplungsbereichs (7) mit dem an dem Kupplungsbereich (7) angreifenden Mitnehmer (17) aufweist.

3. Mikroskop (12) nach Anspruch 2,
wobei das Klemmelement (14) mit einem Objektivantrieb (16) verbunden ist und mittels des Objektivantriebs (16) in Richtung des optischen Strahlengangs (13) des Mikroskops (12) gesteuert beweglich ist.

4. Mikroskop (12) nach einem der Ansprüche 1 bis 3,
wobei das Magazin (21) ein beweglich angeordnetes Reihenmagazin ist, so dass dessen Magazinpositionen (21.n) mindestens einer Übergabeposition (ÜP) zustellbar sind.

5. Mikroskop (12) nach einem der Ansprüche 1 bis 3,
wobei das Magazin (21) ein beweglich angeordnetes Revolvermagazin ist, so dass dessen Magazinpositionen (21.n) mindestens einer Übergabeposition (ÜP) zustellbar sind.

6. Mikroskop (12) nach Anspruch 5,
wobei das Magazin (21) um eine Rotationsachse (25) drehbar ist und die Rotationsachse (25) gegenüber dem optischen Strahlengang (13) des Mikroskops (12) gekippt ist.

7. Mikroskop (12) nach einem der vorhergehenden Ansprüche,
wobei die Objektivhalterung (3) mit elektrischen Kontakten ausgestattet ist.

8. Mikroskop (12) nach einem der vorhergehenden Ansprüche,
mit einem Stativ (30), das als aufrechtes oder inverses Stativ (30) ausgeführt ist.

9. Mikroskop (12) nach einem der Ansprüche 1 bis 7, mit einem Stativ (30), durch das das Objektiv (1) abweichend von einer orthogonalen Ausrichtung der optischen Achse (4) zu einer Objektebene (28), in der sich eine zu mikroskopierende Probe (26) befindet, gehalten und/oder führbar ist.

## Claims

1. Microscope (12) having an objective interchange apparatus (22) comprising a holder (21) for receiving a number of objectives (1) at respective holder positions (21.n) and comprising at least one objective (1) of an objective receptacle (11) which is configured for receiving the objective (1) and is arranged in an optical beam path (13) of the microscope (12), and an objective delivery device (20) which is configured for transporting in each case a selected objective (1) having an objective retainer (3) between its holder position (21.n), which is delivered to a transfer position (ÜP), and the objective receptacle (11), wherein the objective receptacle (11) remains in the optical beam path (13) during the transport of the objective (1), the objective retainer (3) is fitted to an objective housing (2) of the objective (1) or is attached thereto, and the objective retainer (3) has an outer centring diameter (10) as a reference surface, which diameter is guided against a lateral reference surface located in the objective receptacle (11) such that reproducible positioning perpendicular to an optical axis (4) of the microscope (12) is achievable,
and furthermore the object retainer (3) has at least one planar support surface (8) that extends orthogonally with respect to an optical axis (4) of the objective (1);
a clamping apparatus is present for retaining the objective (1) in a use position (EP) in the objective receptacle (11) in a spatially fixed manner, and
the clamping apparatus is formed by an abutment surface (27) of the objective receptacle (11) and at least one clamping element (14), wherein the objective retainer (3) of the objective (1), which is in the use position (EP), is clampable by way of its support surface (8) against the abutment surface (27) by the clamping element (14).

2. Microscope (12) according to Claim 1,
wherein the objective delivery device (20) has a driver (17) and the objective retainer (3) has a coupling region (7) for the releasable positive and/or non-positive and/or magnetic connection of the coupling region (7) to the driver (17) which engages on the coupling region (7).

3. Microscope (12) according to Claim 2,
wherein the clamping element (14) is connected to an objective drive (16) and is movable in a controlled fashion in the direction of the optical beam path (13) of the microscope (12) by means of the objective drive (16) .

4. Microscope (12) according to one of Claims 1 to 3, wherein the holder (21) is a movably arranged series holder such that the holder positions (21.n) thereof are deliverable to at least one transfer position (ÜP).

5. Microscope (12) according to one of Claims 1 to 3, wherein the holder (21) is a movably arranged revolver such that the holder positions (21.n) thereof are deliverable to at least one transfer position (ÜP).

6. Microscope (12) according to Claim 5,
wherein the holder (21) is rotatable about an axis of rotation (25) and the axis of rotation (25) is inclined with respect to the optical beam path (13) of the microscope (12).

7. Microscope (12) according to one of the preceding claims,
wherein the objective retainer (3) is provided with electrical contacts.

8. Microscope (12) according to one of the preceding claims,
having a stand (30) which is configured as an upright or an inverted stand (30).

9. Microscope (12) according to one of Claims 1 to 7, having a stand (30), by way of which the objective (1) is held and/or guidable in deviation from an orthogonal orientation of the optical axis (4) with respect to an object plane (28) in which a sample (26) to be examined by microscope is located.

## Revendications

1. Microscope (12), présentant un dispositif de changement d'objectif (22) comprenant un magasin (21) destiné à recevoir un certain nombre d'objectifs (1) à des positions de magasin (21.n) respectives et au moins un objectif (1) d'une monture d'objectif (11) réalisée pour recevoir l'objectif (1) et disposée dans un trajet de faisceau optique (13) du microscope (12), et un dispositif de réglage d'objectif (20) réalisé pour transporter respectivement un objectif (1) sélectionné et présentant un porte-objectif (3) entre sa position de magasin (21.n) réglée sur une position de transfert (ÜP) et la monture d'objectif (11), dans lequel la monture d'objectif (11) reste dans le trajet de faisceau optique (13) pendant le transport de l'objectif (1), le porte-objectif (3) est rapporté ou fixé à un boîtier d'objectif (2) de l'objectif (1), et le porte-objectif (3) présente un diamètre de centrage extérieur (10) sous la forme d'une surface de référence qui est guidée contre une surface de référence latérale se trouvant dans la monture d'objectif (11) de sorte qu'un positionnement reproductible peut être obtenu perpendiculairement à un axe optique (4) du microscope (12),
et en outre le porte-objectif (3) présente au moins une surface d'appui (8) plane et s'étendant de manière orthogonale à un axe optique (4) de l'objectif (1) ;
il existe un dispositif de serrage pour le maintien stationnaire de l'objectif (1) dans une position d'utilisation (EP) dans la monture d'objectif (11), et le dispositif de serrage est formé par une surface de butée (27) de la monture d'objectif (11) et au moins un élément de serrage (14), le porte-objectif (3) de l'objectif (1) se trouvant dans la position d'utilisation (EP) pouvant être serré par l'élément de serrage (14) contre la surface de butée (27) par sa surface d'appui (8) .

2. Microscope (12) selon la revendication 1, dans lequel le dispositif de réglage d'objectif (20) présente un élément d'entraînement (17), et le porte-objectif (3) présente une zone de couplage (7) pour la connexion amovible par complémentarité de forme et/ou par adhérence et/ou magnétique de la zone de couplage (7) avec l'élément d'entraînement (17) attaquant au niveau de la zone de couplage (7).

3. Microscope (12) selon la revendication 2, dans lequel l'élément de serrage (14) est relié à un dispositif d'entraînement d'objectif (16) et est mobile de manière contrôlée au moyen du dispositif d'entraînement d'objectif (16) en direction du trajet de faisceau optique (13) du microscope (12).

4. Microscope (12) selon l'une quelconque des revendications 1 à 3, dans lequel le magasin (21) est un magasin en série disposé de manière mobile de sorte que ses positions de magasin (21.n) peuvent être réglées sur au moins une position de transfert (ÜP).

5. Microscope (12) selon l'une quelconque des revendications 1 à 3, dans lequel le magasin (21) est un magasin rotatif disposé de manière mobile de sorte que ses positions de magasin (21.n) peuvent être réglées sur au moins une position de transfert (ÜP).

6. Microscope (12) selon la revendication 5, dans lequel le magasin (21) est pivotant autour d'un axe de rotation (25), et l'axe de rotation (25) est basculé par rapport au trajet de faisceau optique (13) du microscope (12) .

7. Microscope (12) selon l'une quelconque des revendications précédentes, dans lequel le porte-objectif (3) est équipé de contacts électriques.

8. Microscope (12) selon l'une quelconque des revendications précédentes, comprenant un statif (30) qui est réalisé sous la forme d'un statif (30) droit ou inversé.

9. Microscope (12) selon l'une quelconque des revendications 1 à 7, comprenant un statif (30) par lequel l'objectif (1) peut être maintenu et/ou guidé en s'écartant d'un alignement orthogonal de l'axe optique (4) par rapport à un plan d'objet (28) dans lequel se trouve un échantillon (26) à observer au microscope.
